# EUROPÄISCHE PATENTSCHRIFT

(11) **EP 0 577 543 B1**
(45) Veröffentlichungstag und Bekanntmachung des Hinweises auf die Patenterteilung: **13.12.1995**
(21) Anmeldenummer: 93810073.2
(22) Anmeldetag: 05.02.1993
(51) Int. Cl.: B01D 53/00, B01D 5/00, F01N 3/04

(54) **Verfahren und Anlage zum Reinigen des einen Grossdieselmotor verlassenden Abgases**
Process and installation for purifying exhaust gases from a large diesel engine
Procédé et installation de nettoyage de gaz d'échappement d'un gros moteur diesel

(30) Priorität: 03.07.1992 EP 92810509
(43) Veröffentlichungstag der Anmeldung: 05.01.1994
(73) Patentinhaber: New Sulzer Diesel AG, CH-8401 Winterthur (CH)
(72) Erfinder: Vollenweider, Jakob, Dr., CH-8400 Winterthur (CH)
(74) Vertreter: Hammer, Bruno, Dr.

(56) Entgegenhaltungen:
- EP-A- 0 355 317
- DE-A- 1 953 377
- DE-A- 2 322 336
- FR-A- 2 586 204
- GB-A- 997 968
- GB-A- 2 118 448

## Beschreibung

Der Betrieb von Grossdieselmotoren mit Brennstoffen geringer Qualität, z.B. hochviskose Schweröle, führt häufig zu beträchtlicher Rauchemission. Der Rauch setzt sich aus kleinsten Partikeln zusammen, die aus Russkernen gebildet werden, an denen schwerflüchtige Kohlenwasserstoffe gebunden sind. Ausserdem sind an den Russkernen auch Sulfate, Wasser und metallische Abriebpartikel angelagert. Zum Bekämpfen des dieselmotorischen Rauchs bestehen verschiedene Verfahren, die sich grob in zwei Gruppen einteilen lassen, und zwar enthält die eine Gruppe Verfahren zur Ursachenbekämpfung, wogegen die andere Gruppe Verfahren zum Bekämpfen der Folgen enthält. Zu den Verfahren der ersten Gruppe gehören die Verwendung von höherwertigen Brennstoffen, der Zusatz von verbrennungsfördernden Additiven und das Verbessern der Verbrennung durch konstruktive oder operative Massnahmen. Die zweite Gruppe umfasst Verfahren, durch die Abgasnachbehandlungen vorgenommen werden. Diese Abgasnachbehandlungen lassen sich wiederum aufteilen in solche, die auf eine Reduktion einzelner Partikelkomponenten zielen, wie Nachverbrennung oder katalytische Oxidation, oder die eine Extraktion ganzer Partikel zum Ziel haben, wie das Abscheiden in Zyklon-, Elektro-, Monolith- oder Schlauchfiltern.

Aus der DE-A-1953377 ist ein verfahren zur Ausscheidung von Giftstoffen aus Abgasen von Kraftmaschinen bekannt, bei dem die Abgase auf Umgebungstemperatur abgekühlt und mit neutraler Flüssigkeit angereichert werden, bei dem das Flüssigkeitsgemisch auf etwa 0°C abgekühlt und getrocknet wird und bei dem anschließend das getrocknete Gas bis unter - 10°C tiefgekühlt und durch ein chemisches Filter geleitet wird. Weiter ist aus der GB-A-997968 ein verfahren bekannt, bei dem organische Lösungsmittel aus einem Gastrom zum Zweck der Rückgewinnung durch Kühlen und Eindüsen derselben oder einer chemich ähnlichen Flüssigkeit abgeschieden werden. Alle bekannten Verfahren weisen aber immer noch erhebliche Nachteile auf wie geringe Effizienz, hohe Investitions-und/oder Betriebskosten, Entsorgungsprobleme oder geringe Betriebssicherheit. Letztere ist besonders dann eingeschränkt, wenn die Partikel - wie schon erwähnt - beträchtliche Mengen an schwerflüchtigen, klebrigen Kohlenwasserstoffen enthalten.

Der Erfindung liegt die Aufgabe zugrunde, ein Reinigungsverfahren für das Abgas von Grossdieselmotoren zu schaffen, bei dem durch einfache und hinsichtlich der Kosten wenig aufwendige Massnahmen die genannten Nachteile wesentlich verringert oder sogar ganz vermieden werden.

Diese Aufgabe wird erfindungsgemäss dadurch gelöst, dass das vom Grossdieselmotor kommende Abgas auf ca. 100°C abgekühlt wird, dass das abgekühlte Abgas mit eingedüstem Dieselbrennstoff in Berührung gebracht wird, wobei im Abgas enthaltene Kohlenwasserstoffe an den Brennstofftröpfchen auskondensieren, und dass das so behandelte Abgas von den Kondensattröpfchen befreit wird. Im Rahmen dieser Anmeldung ist unter "Dieselbrennstoff" jeder in einer nach dem Dieselverfahren arbeitenden Brennkraftmaschine verwendbarer Brennstoff zu verstehen.

Diesen Verfahren liegt die Idee zugrunde, mit Hilfe von künstlich in das Abgas eingebrachten, aus Dieselbrennstoff bestehenden Kondensationskernen Kohlenwasserstoffe in kontrollierter Weise zum Kondensieren zu bringen, wonach sie aus dem Abgas entfernt werden. Hierdurch ergibt sich der besondere Vorteil, dass das abgeschiedene Kondensat als Brennstoff für den Grossdieselmotor wieder verwendet werden kann. Als einzudüsende Dieselbrennstoffe sind hochsiedende Brennstoffe besonders gut geeignet, wie z.B. Rapsölmethylester.

Eine Anlage zum Durchführen des erfindungsgemässen Verfahrens ist dadurch gekennzeichnet, dass in einer am Grossdieselmotor angeschlossenen Abgasleitung - in Strömungsrichtung des Abgases gesehen - ein Wärmeübertrager, eine Kondensationszone und ein Abscheider angeordnet sind und die Kondensationszone mit mindestens einer Düse versehen ist, die mit einem Vorrat an Dieselbrennstoff in Verbindung steht.

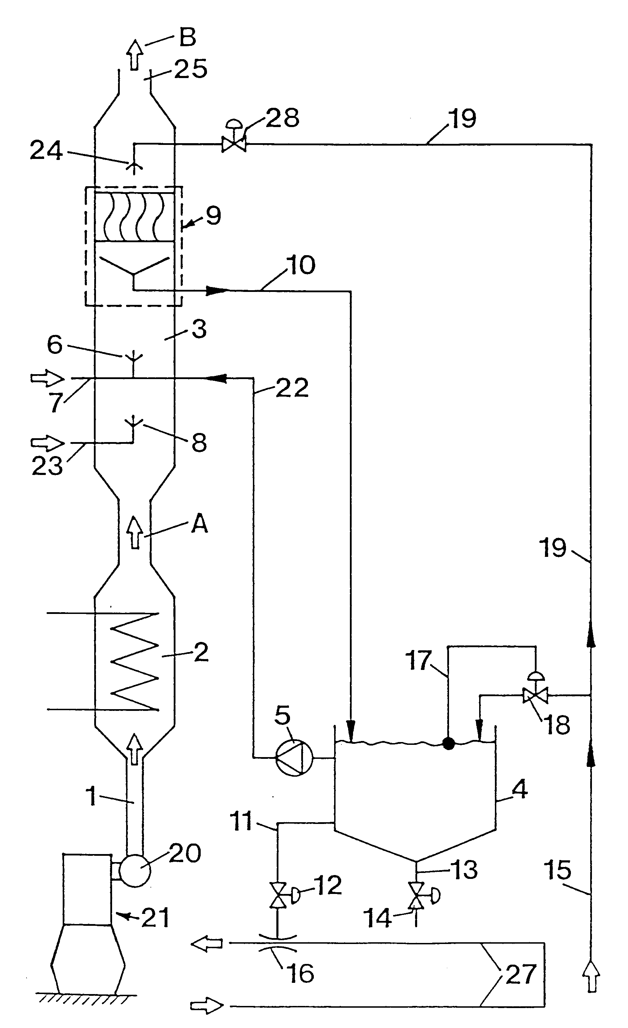

Ein Ausführungsbeispiel des erfindungsgemässen Verfahrens ist in der folgenden Beschreibung anhand der Zeichnung näher erläutert, die schematisch eine Anlage zum Durchführen des Verfahrens zeigt.

An den Auspuff 20 eines Grossdieselmotors 21, der mit Schweröl als Hauptbrennstoff betrieben wird, ist in nicht näher dargestellter Weise eine Abgasleitung 1 angeschlossen, die zu einem Wärmeübertrager 2 führt. An den Austritt des Wärmeübertragers 2, der sekundärseitig von Wasser durchströmt ist, schliesst sich eine Kondensationszone 3 an, in der mindestens eine Düse 6 angeordnet ist, der über eine Leitung 22 Dieselbrennstoff, z.B. Rapsölmethylester, zugeführt wird. Der Düse 6 wird ausserdem über eine Leitung 7 Pressluft zugeführt, mit deren Hilfe der Dieselbrennstoff in der Düse 6 in feinste Tröpfchen verdüst wird. In Strömungsrichtung des Abgases (Pfeil A) vor der Düse 6 ist mindestens eine Düse 8 vorgesehen, der über eine Leitung 23 Wasser zugeführt wird. In Strömungsrichtung des Abgases hinter der Düse 6 ist ein Tropfenabscheider 9 angeordnet, hinter dem sich mindestens eine Waschdüse 24 befindet. In Strömungsrichtung des Abgases hinter der Waschdüse 24 schliesst sich eine Leitung 25 an, über die das gereinigte Abgas (Pfeil B) aus der Reinigungsanlage in die Atmosphäre austritt. Die im Tropfenabscheider 9 abgeschiedene Flüssigkeit wird über eine Leitung 10 einem Tank 4 zugeführt, in dem ein Vorrat an Dieselbrennstoff enthalten ist. Am Tank 4 ist auch die Leitung 22 angeschlossen, die eine Pumpe 5 enthält, die den als Kondensationsmittel dienenden Dieselbrennstoff zur Düse 6 fördert.

Zum Versorgen des Tanks 4 mit Dieselbrennstoff ist eine Zufuhrleitung 15 vorgesehen, die über ein Regelventil 18 in den Tank 4 mündet und die mit einer nicht dargestellten Quelle für den Dieselbrennstoff verbunden ist. Das Regelventil 18 wird von einem Niveaufühler 17 beeinflusst, der die Füllhöhe im Tank 4 kontrolliert. Von der Leitung 15 zweigt eine Leitung 19 ab, die über ein Absperrventil 28 zur Waschdüse 24 führt. In Bodennähe des Tanks 4 ist eine Ablassleitung 11 angeschlossen, die ein Absperrventil 12 enthält und die über eine Venturi-Düse 16 in einen Brennstoffkreislauf 27 mündet, der mit dem Brennstoffsystem des Grossdieselmotors 21 in nicht näher dargestellter Weise in Verbindung steht. An der tiefsten Stelle des Tanks 4 ist eine Leitung 13 mit einem Ablassventil 14 angeschlossen, über die allenfalls vorhandener Bodensatz aus dem Tank abgeführt werden kann.

Die beschriebene Anlage funktioniert wie folgt:
Das aus dem Auspuff 20 austretende Abgas des Grossdieselmotors 21 hat normalerweise eine Temperatur von etwa 200 bis 400°C und strömt über die Abgasleitung 1 zunächst zum Wärmeübertrager 2, in dem das Abgas auf ungefähr 170°C abgekühlt wird. Das abgekühlte Abgas strömt dann in die Kondensationszone 3, die so bemessen ist, dass das Abgas während einer Verweilzeit von 0,5 s die Zone 3 passiert. Im Abgas enthaltene Kohlenwasserstoffe werden dabei durch den über die Düse 6 eingedüsten Dieselbrennstoff auskondensiert, wobei dieser Prozess durch das zusätzlich über die Düse 8 eingedüste Kühlwasser beschleunigt wird. Ausserdem wird durch diese zusätzliche Abkühlung sichergestellt, dass kein Dieselbrennstoff verdampft. Durch das eingedüste Wasser stellt sich in der Kondensationszone 3 eine Temperatur von ungefähr 100°C ein. Die sich in der Zone 3 bildenden Kondensattröpfchen strömen mit dem Abgas zum Tropfenabscheider 9, in dem sie ausgeschieden und über die Leitung 10 kontinuierlich zum Tank 4 geleitet werden. Das aus dem Tropfenabscheider 9 austretende Abgas ist durch das Auskondensieren so weit gereinigt, dass es über die Leitung 25 in die Atmosphäre entlassen werden kann.

Ueber die Waschdüse 24 wird der Tropfenabscheider 9 periodisch mit Dieselbrennstoff gereinigt, der nach Oeffnen des Absperrventils 28 zur Waschdüse gelangt.

Das über die Leitung 10 zum Tank 4 fliessende Kondensat ist dickflüssiger als der über die Leitung 22 zugeführte Dieselbrennstoff, was zu einer allmählichen Verdickung des Tankinhalts führen würde. Um dem vorzubeugen, werden periodisch über das Absperrventil 12 die dickflüssigsten, sich nahe dem Boden des Tanks 4 ansammelnden Komponenten aus dem Tank abgelassen und über die Venturi-Düse 16 in den Brennstoffkreislauf 27 geleitet.

Auch Dieselöl lässt sich noch als Kondensationsmittel in der Zone 3 verwenden, obwohl es nicht zur besonders geeigneten Gruppe der hochsiedenden Dieselbrennstoffe gehört.

## Patentansprüche

1. Verfahren zum Reinigen des einen Grossdieselmotor verlassenden Abgases bei dem dass das vom Grossdieselmotor kommende Abgas auf ca. 100°C abgekühlt wird, das abgekühlte Abgas mit eingedüstem Dieselbrennstoff in Berührung gebracht wird, wobei im Abgas enthaltene Kohlenwasserstoffe an den Brennstofftröpfchen auskondensieren, und das so behandelte Abgas von den Kondensattröpfchen befreit wird.

2. Verfahren nach Anspruch 1, dadurch gekennzeichnet, dass der Dieselbrennstoff mit Pressluft eingedüst wird.

3. Verfahren nach Anspruch 1 oder 2, dadurch gekennzeichnet, dass die Verweilzeit des Abgases in der Kondensationszone ungefähr 0,5 Sekunden beträgt.

4. Verfahren nach einem der Ansprüche 1 bis 3, dadurch gekennzeichnet, dass das Abkühlen des Abgases in zwei Stufen erfolgt.

5. Verfahren nach Anspruch 4, dadurch gekennzeichnet, dass das Abkühlen in der ersten Stufe durch einen Wärmeübertrager erfolgt und als zweite Stufe zwischen dem Wärmeübertrager und dem Eindüsen des Dieselbrennstoffs Wasser in das Abgas eingedüst wird.

6. Verfahren nach einem der Ansprüche 1 bis 5, dadurch gekennzeichnet, dass das in der Kondensatzone ausgeschiedene Kondensat einem Dieselbrennstoffvorrat zugeführt wird.

7. Verfahren nach Anspruch 6, dadurch gekennzeichnet, dass aus dem Bodenbereich des Dieselbrennstoffvorrats periodisch ein Teil des Vorrats abgelassen und dem im Grossdieselmotor zu verbrauchenden Brennstoff zugeführt wird.

8. Verfahren nach einem der Ansprüche 1 bis 7, dadurch gekennzeichnet, dass als Dieselbrennstoff ein hochsiedender Brennstoff dient.

9. Verfahren nach Anspruch 8, dadurch gekennzeichnet, dass der hochsiedende Brennstoff Rapsölmethylester ist.

10. Anlage zum Durchführen des Verfahrens nach Anspruch 1, dadurch gekennzeichnet, dass in einer am Grossdieselmotor (21) angeschlossenen Abgasleitung (1) - in Strömungsrichtung des Abgases gesehen - hintereinander ein Wärmeübertrager (2), eine Kondensationszone (3) und ein Abscheider (9) angeordnet sind und die Kondensationszone mit mindestens einer Düse (6) versehen ist, die mit einem Vorrat an Dieselbrennstoff (4) in Verbindung steht.

## Claims

1. A method for cleaning the exhaust gas leaving a large diesel engine, the exhaust gas coming from the large diesel engine being cooled to roughly 100°C, the cooled exhaust gas being brought into contact with jetted diesel fuel, hydrocarbons contained in the exhaust gas being condensed out at the diesel fuel droplets, and the exhaust gas treated in this way being separated from the condensate droplets.

2. A method according to claim 1, characterized in that the diesel fuel is jetted with compressed air.

3. A method according to Claim 1 or 2, characterized in that the time the exhaust gas stays in the condensation zone is roughly 0.5 seconds.

4. A method according to one of Claims 1 to 3, characterized in that the cooling of the exhaust gas is performed in two stages.

5. A method according to Claim 4, characterized in that in the first stage cooling is performed by a heat exchanger and as the second stage water is jetted into the exhaust gas between the heat exchanger and the jetting of the diesel fuel.

6. A method according to one of Claims 1 to 5, characterized in that the condensate separated in the condensate zone is supplied to a supply of diesel fuel.

7. A method according to claim 6, characterized in that a part of the supply is periodically drained from the base region of the supply of diesel fuel and is supplied to the fuel to be used in the large diesel engine.

8. A method according to one of Claim 1 to 7, characterized in that the diesel fuel is a fuel with high boiling point.

9. A method according to Claim 8, characterized in that the fuel is rape seed oil-methyl-ester.

10. An installation for performing the method according to claim 1, characterized in that in an exhaust pipe (1) connected to the large diesel engine (21) - seen in the direction of flow of the exhaust gas - are disposed one behind the other a heat exchanger (2), a condensation zone (3) and a separator (9) and the condensation zone is provided with at least one nozzle (9), which is connected to a supply of diesel fuel (4).

## Revendications

1. Procédé pour nettoyer les gaz d'échappement sortant d'un grand moteur Diesel, procédé dans lequel les gaz d'échappement, qui proviennent d'un grand moteur Diesel, sont refroidis à environ 100°C, les gaz d'échappement refroidis sont mis en contact avec du carburant pour Diesel que l'on pulvérise, les hydrocarbures contenus dans les gaz d'échappement se condensant sur les gouttelettes de carburant, et les gaz d'échappement ainsi traités sont libérés des gouttelettes de condensation.

2. Procédé selon la revendicatiion 1, caractérisé en ce que le carburant pour Diesel est pulvérisé avec de l'air comprimé.

3. Procédé selon la revendication 1 ou 2, caractérisé en ce que la durée de séjour des gaz d'échappement dans la zone de condensation est d'environ 0,5 seconde.

4. Procédé selon l'une des revendications 1 à 3, carcatérisé en ce que le refroidissement des gaz d'échappement s'opère en deux étapes.

5. Procédé selon la revendication 4, caractérisé en ce que le refroidissement dans la première étape a lieu au moyen d'un échangeur de chaleur et dans la seconde étape on pulvérise de l'eau dans les gaz d'échappement entre l'échangeur de chaleur et la pulvérisation du carburant pour Diesel.

6. Procédé selon l'une des revendications 1 à 5, caractérisé en ce que le condensat, qui a été collecté dans la zone de condensation, est envoyé à un réservoir de carburant pour Diesel.

7. Procédé selon la revendication 6, caractérisé en ce que l'on évacue périodiquement de la zone du fond du réservoir de carburant pour Diesel une partie de la réserve et on l'envoie au carburant à consommer dans le grand moteur Diesel.

8. Procédé selon l'une des revendications 1 à 7, caractérisé en ce que l'on utilise comme carburant pour Diesel un carburant lourd.

9. Procédé selon la revendication 8, caractérisé en ce que le carburant lourd est un ester méthylique d'huile de colza.

10. Installation pour la mise en oeuvre du procédé selon la revendication 1, caractérisée en ce que l'on dispose dans une conduite de gaz d'échappement (1) raccordée au grand moteur Diesel (21) - vue dans le sens d'écoulement des gaz d'échappement - un échangeur de chaleur (2), une zone de condensation (3) et un collecteur (9) les uns derrière les autres et en ce que la zone de condensation (3) est pourvue d'au moins une buse (6), qui est en liaison avec un réservoir de carburant pour Diesel (4).
